# EUROPÄISCHE PATENTSCHRIFT

(11) **EP 4 309 987 B1**
(45) Veröffentlichungstag und Bekanntmachung des Hinweises auf die Patenterteilung: **27.05.2026**
(21) Anmeldenummer: 23185605.5
(22) Anmeldetag: 14.07.2023
(51) Int. Cl.: B62M 6/45

(54) **VERFAHREN ZUM STEUERN EINES ELEKTRISCHEN ANTRIEBS EINES ZWEIRADS SOWIE STEUERUNGSEINRICHTUNG ZUR AUSFÜHRUNG DES VERFAHRENS**
METHOD FOR CONTROLLING AN ELECTRIC DRIVE OF A TWO-WHEELED VEHICLE AND CONTROL DEVICE FOR CARRYING OUT THE METHOD
PROCÉDÉ DE COMMANDE D'UN ENTRAÎNEMENT ÉLECTRIQUE D'UN DEUX ROUES ET DISPOSITIF DE COMMANDE DESTINÉ À LA MISE EN UVRE DU PROCÉDÉ

(30) Priorität: 21.07.2022 DE 102022118220
(43) Veröffentlichungstag der Anmeldung: 24.01.2024
(73) Patentinhaber: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB

(56) Entgegenhaltungen:
- WO-A1-2021/116353
- US-A1- 2014 365 013
- US-A1- 2016 297 499
- US-A1- 2017 151 998
- US-A1- 2021 114 687

## Beschreibung

### Technisches Gebiet

Die vorliegende Erfindung bezieht sich auf ein Verfahren zum Steuern eines elektrischen Antriebs eines Zweirads. Außerdem betrifft die vorliegende Erfindung eine Steuerungseinrichtung zum Ausführen des Verfahrens sowie ein Zweirad mit einer solchen Steuerungseinrichtung. Insbesondere bezieht sich die Erfindung auf ein Verfahren zum Steuern eines elektrischen Antriebs eines Zweirads, das auf der Grundlage einer in eine Kurbeleinrichtung eingeleiteten Muskelkraft eines Fahrers des Zweirads und einer Antriebskraft einer an dem Zweirad vorgesehenen elektrischen Antriebsmaschine über ein Antriebsrad antreibbar ist. Insofern betrifft die Erfindung ein Verfahren zum Steuern eines elektrischen Antriebs eines Zweirads, das als E-Bike oder Pedelec ausgestaltet ist.

### Stand der Technik

Verfahren zum Steuern eines elektrischen Antriebs eines als E-Bike oder Pedelec ausgestalteten Zweirads sind bekannt. Bei bekannten gattungsgemäßen Zweirädern wird die elektrische Maschine zum Antreiben des Zweirads betrieben, wenn die Kurbeleinrichtung des Zweirads von dem Fahrer betrieben ist. Ferner wird bei Einstellung des Betriebs der Kurbeleinrichtung des Zweirads der Betrieb der elektrischen Maschine des Zweirads aufgrund von regulatorischen Vorgaben unterbrochen. Das Dokument US 2017/151998 A1 zeigt ein Verfahren zum Steuern eines elektrischen Antriebs eines Zweirads.

### Darstellung der Erfindung

Ein Verfahren zum Steuern eines elektrischen Antriebs eines Zweirads ist vorgesehen, wobei das Zweirad auf der Grundlage einer in eine Kurbeleinrichtung des Zweirads eingeleiteten Muskelkraft eines Fahrers und einer Antriebskraft einer an dem Zweirad vorgesehenen elektrischen Antriebsmaschine über ein Antriebsrad antreibbar ist. Das Verfahren weist die folgenden Schritte auf:
Erfassen von Drehmomentdaten, die sich auf die Antriebskraft an dem Antriebsrad des Zweirads beziehen;
Bestimmen des Vorliegens einer Antriebskraftanforderung des Fahrers zu einer Bereitstellung der Antriebskraft von der elektrischen Maschine;
Bestimmen des Vorliegens einer Antriebsbedingung für die Bereitstellung der Antriebskraft von der elektrischen Maschine;
Ansteuern der elektrischen Antriebsmaschine zur Bereitstellung der Antriebskraft nach der Bestimmung des Vorliegens der Antriebskraftanforderung des Fahrers zur Bereitstellung einer Antriebskraft von der elektrischen Maschine und bei Bestimmung des Vorliegens der Antriebsbedingung für die Bereitstellung der Antriebskraft von der elektrischen Maschine.

Das Verfahren kann auf ein Zweirad angewendet werden, das als E-Bike oder Pedelec ausgestaltet ist. Insofern kann das Zweirad mit einer Kurbeleinrichtung ausgestattet sein, deren Antriebskraft durch ein Übertragungsmittel auf ein Antriebsrad des Zweirads übertragen wird. Ferner kann das Zweirad eine elektrische Antriebsmaschine derart aufweisen, dass die Antriebskraft der elektrischen Maschine mit der über die Kurbeleinrichtung eingeleiteten Muskelkraft kombiniert und an das Antriebsrad abgegeben werden kann.

Gemäß einer Ausführungsform können die Drehmomentdaten mindestens einen Drehmomentwert oder mehrere Drehmomentwerte umfassen, die in einer zeitlichen Abfolge oder kontinuierlich erfasst werden. Ferner kann der Schritt des Speicherns der Drehmomentdaten in einer Speichereinrichtung vorgesehen sein. Der mindestens eine Drehmomentwert oder die mehreren Drehmomentwerte können dabei durch entsprechende Erfassungsmittel erfasst werden. Dabei kann die Erfassung an dem Antriebsrad des Zweirads über ein entsprechendes Mittel erfolgen. Alternativ kann die Erfassung der Drehmomentdaten an einem Abschnitt eines Antriebsstrangs des Zweirads erfolgen, so dass diese Drehmomentdaten auf die Antriebskraft an dem Antriebsrad des Zweirads zurückschließen lassen.

Gemäß einer Ausführungsform kann der Schritt des Speicherns der Drehmomentdaten innerhalb eines vorbestimmten vorhergehenden Zeitraums erfolgen. Dabei betrifft der vorhergehende Zeitraum einen Zeitraum, der vor der Bestimmung des Vorliegens der Antriebskraftanforderung liegt. Dabei kann der vorhergehende Zeitraum, in welchem die Drehmomentdaten gespeichert werden, eine vorbestimmte Zeitdauer umfassen, die insbesondere einige Sekunden, beispielsweise 5 Sekunden umfasst. Insbesondere können in dem Schritt des Speicherns der Drehmomentdaten diejenigen Drehmomentdaten, die vor dem vorbestimmten vorhergehenden Zeitraum erfasst wurden, aus dem Speicher gelöscht werden. Die in dem Schritt des Speicherns der Drehmomentdaten gespeicherten Drehmomentdaten können zur weiteren Verwendung für das Verfahren bereitgestellt werden.

Gemäß einer Ausführungsform kann auf der Basis der Drehmomentdaten ein Referenzdrehmoment bestimmt werden, das insbesondere durch Bestimmen eines Mittelwerts, eines Maximalwerts oder eines gewichteten Werts aus dem innerhalb des vorbestimmten Zeitraums gespeicherten Drehmomentdaten bestimmt werden kann. Dabei kann das Referenzdrehmoment gespeichert werden und zur Verwendung in dem Verfahren bereitgestellt werden. Das Referenzdrehmoment kann ein Drehmoment darstellen, das auf die Antriebskraft zurückschließen lässt, die an dem Antriebsrad des Zweirads innerhalb des vorbestimmten vorhergehenden Zeitraums vorgelegen hat. Das Referenzdrehmoment kann der letzte erfasste Drehmomentwert vor der Bestimmung des Vorliegens der Antriebskraftanforderung sein.

Gemäß einer Ausführungsform kann die nach Bestimmen des Vorliegens der Antriebskraftanforderung verstrichene Zeit erfasst werden, wobei erfasst wird, dass die Antriebsbedingung vorliegt, wenn die verstrichene Zeit nach Bestimmung des Vorliegens der Antriebskraftanforderung eine vorbestimmte Zeitdauer nicht übersteigt. Dabei kann die vorbestimmte Zeitdauer voreingestellt sein. Alternativ kann die vorbestimmte Zeitdauer variabel bzw. einstellbar sein. Die vorbestimmte Zeitdauer kann in diesem Zusammenhang im Bereich von einigen Sekunden beispielsweise 3 bis 5 Sekunden liegen. Die Zeitdauer kann an die Anforderungen angepasst werden und ist nicht auf die Beispiele beschränkt.

Gemäß der Erfindung wird eine Neigung des Zweirads in Fahrtrichtung bezogen auf die Horizontale an der Position des Zweirads erfasst, wobei erfasst wird, dass die Antriebsbedingung vorliegt, wenn die erfasste Neigung mindestens einem vorbestimmten eine Steigung definierenden Neigungswert entspricht. Dabei können entsprechende Erfassungsmittel eingesetzt werden, die an dem Zweirad vorgesehen sind, um eine Niveaudifferenz zwischen einem Vorderrad und einem Hinterrad des Zweirads zu erkennen. Insbesondere kann mit dieser Ausführungsform erfasst werden, ob sich das Zweirad an einer Steigung befindet, wobei bestimmt werden kann, ob die Steigung mindestens einer vorbestimmten Steigung entspricht. Die vorbestimmte Steigung kann dabei auf einen Wert gesetzt werden, der für den Fahrer eine spürbare Steigung darstellt. Diese Steigung kann bspw. im Bereich von 3-5% liegen. Geringere oder höhere Steigungswerte sind denkbar.

Gemäß einer Ausführungsform kann ferner ein Schritt zum Bestimmen einer Abbruchbedingung vorgesehen sein, wobei das Ansteuern der elektrischen Antriebsmaschine zur Bereitstellung der Antriebskraft nach Bestimmung des Vorliegens der Antriebskraftanforderung bei Bestimmung des Vorliegens der Abbruchbedingung unterbrochen wird.

Gemäß einer Ausführungsform kann im Schritt zum Bestimmen einer Abbruchbedingung die Abbruchbedingung bestimmt werden, wenn die nach Bestimmung des Vorliegens der Antriebskraftanforderung verstrichene Zeit eine vorbestimmte Zeitdauer übersteigt. In diesem Zusammenhang wird die Zeit erfasst, die nach der Bestimmung des Vorliegens der Antriebskraftanforderung verstrichen ist. Dabei kann die vorbestimmte Zeitdauer im vorliegenden Zusammenhang im Bereich von mehreren Sekunden, beispielsweise 3 bis 5 Sekunden liegen.

Gemäß einer Ausführungsform kann die nach der Unterbrechung des Ansteuerns der elektrischen Maschine zur Bereitstellung der Antriebskraft verstrichene Zeit erfasst werden, wobei erfasst wird, dass die Antriebsbedingung vorliegt, wenn die nach der Unterbrechung des Ansteuerns der elektrischen Maschine zur Bereitstellung der Antriebskraft verstrichene Zeit mindestens einer vorbestimmten Zeitdauer entspricht. In diesem Zusammenhang kann ermöglicht werden, dass nach der Unterbrechung des Ansteuerns der elektrischen Maschine zur Bereitstellung der Antriebskraft nicht unmittelbar ein erneutes Ansteuern der elektrischen Maschine zur Bereitstellung der Antriebskraft erfolgen kann. In dem Zusammenhang kann die vorbestimmte Zeitdauer im Bereich von einigen Sekunden liegen. Vorzugsweise liegt die vorbestimmte Zeitdauer im vorliegenden Zusammenhang in einem Bereich von 1 Sekunde.

Gemäß einer Ausführungsform können die nach der Unterbrechung des Ansteuerns der elektrischen Maschine zur Bereitstellung der Antriebskraft erfolgenden Umdrehungen an einem der Räder oder an einer Kurbeleinrichtung des Zweirads erfasst werden, wobei erfasst wird, dass die Antriebsbedingung vorliegt, wenn die nach der Unterbrechung des Ansteuerns der elektrischen Maschine zur Bereitstellung der Antriebskraft erfassten Umdrehungen mindestens einer vorbestimmten Anzahl von Umdrehungen entspricht. Dabei kann die vorbestimmte Anzahl von Umdrehungen an einem der Räder beispielsweise einer vollständigen Umdrehung entsprechen. Alternativ kann die vorbestimmte Anzahl von Umdrehungen an einem der Räder mehreren Umdrehungen, insbesondere 1 bis 5 Umdrehungen entsprechen. Für den Fall, dass die Anzahl der Umdrehungen der Pedaleinrichtung des Zweirads berücksichtigt wird, kann ein Übersetzungsverhältnis zwischen der Pedaleinrichtung und dem Antriebsrad berücksichtigt werden. Insofern kann die vorbestimmte Anzahl von Umdrehungen an der Kurbeleinrichtung des Zweirads entsprechend definiert werden. Beispielsweise kann die vorbestimmte Anzahl von Umdrehungen an der Kurbeleinrichtung des Zweirads 5 bis 10 Umdrehungen entsprechen.

Gemäß einer Ausführungsform kann das Ansteuern der elektrischen Antriebsmaschine unter Berücksichtigung der erfassten Drehmomentdaten erfolgen. Insbesondere werden die erfassten Drehmomentdaten beim Ansteuern der elektrischen Antriebsmaschine insofern berücksichtigt, dass eine Leistung der elektrischen Antriebsmaschine nach der Bestimmung des Vorliegens der Antriebskraftanforderung geeignet eingestellt wird.

Gemäß einer Ausführungsform kann im Schritt des Ansteuerns der elektrischen Antriebsmaschine die Antriebskraft derart eingestellt werden, dass der Antrieb des Zweirads nach Bestimmung des Vorliegens der Antriebskraftanforderung ausgehend von dem Antrieb des Zweirads vor der Bestimmung des Vorliegens der Antriebskraftanforderung fortgesetzt wird. Insbesondere kann mit dieser Vorgehensweise bewirkt werden, dass eine Unterbrechung des Antriebs der elektrischen Antriebsmaschine beispielsweise aufgrund einer entsprechenden automatisierten Ansteuerung unterbunden werden kann. Dabei kann die Fortsetzung der Ansteuerung der elektrischen Maschine derart definiert werden, dass die vorhergehend vorliegende Antriebskraft an dem Antriebsrad des Zweirads innerhalb eines vorbestimmten Abbrechungsbereichs beibehalten werden kann.

Gemäß einer Ausführungsform kann im Schritt des Ansteuerns der elektrischen Antriebsmaschine die Antriebskraft derart eingestellt werden, dass die Antriebskraft des Zweirads nach Bestimmung des Vorliegens der Antriebskraftanforderung im Wesentlichen auf der Antriebskraft des Zweirads vor der Bestimmung des Vorliegens der Antriebskraftanforderung gehalten wird. In dieser Ausführungsform kann durch die Berücksichtigung der erfassten Drehmomentdaten bei der Ansteuerung der elektrischen Antriebsmaschine die Antriebskraft an dem Antriebsrad des Zweirads auf einem Wert gehalten werden, der als unterbrechungsfreier Antrieb des Antriebsrads wirkt.

Gemäß einer Ausführungsform kann das Ansteuern der elektrischen Antriebsmaschine zur Bereitstellung der Antriebskraft nach Bestimmung des Vorliegens der Antriebskraftanforderung des Fahrers gestattet werden, wenn die Einleitung von Muskelkraft durch den Fahrer in die Kurbeleinrichtung unterbrochen ist oder die Kurbeleinrichtung von dem Fahrer nicht betrieben wird. Aufgrund der Unterbrechung der Einleitung von Muskelkraft durch den Fahrer in die Kurbeleinrichtung oder die Unterbrechung des Betriebs der Kurbeleinrichtung durch den Fahrer kann bei herkömmlichen gattungsgemäßen Zweirädern der Antrieb der elektrischen Antriebsmaschine unterbrochen werden. Mit dem vorliegenden Verfahren kann dieser Sachverhalt berücksichtigt werden und somit als Bedingung für die Ansteuerung der elektrischen Antriebsmaschine zur Bereitstellung der Antriebskraft nach Bestimmung des Vorliegens der Antriebskraftanforderung des Fahrers die Unterbrechung der Einleitung von Muskelkraft durch den Fahrer in die Kurbeleinrichtung oder die Unterbrechung des Betriebs der Kurbeleinrichtung durch den Fahrer definiert werden.

Gemäß einer Ausführungsform kann die Antriebskraftanforderung von einem an dem Zweirad vorgesehenen Bedienelement erfasst werden, wobei das Bedienelement insbesondere als Schaltelement mit zwei Schaltpositionen ausgebildet sein kann. Das Schaltelement kann dabei ein Taster sein. Das Schaltelement kann von dem Fahrer betätigt werden, so dass das Schaltelement ein Signal abgibt, das als Antriebskraftanforderung erfasst werden kann.

Gemäß einer Ausführungsform kann die Antriebskraftanforderung von einem an dem Zweirad vorgesehenen Bedienelement erfasst werden, wobei das Bedienelement als Stellelement mit einer kontinuierlichen Einstellbarkeit zur Vorgabe eines Sollwerts der Antriebskraft der elektrischen Antriebsmaschine ausgebildet sein kann. In dieser Ausführungsform kann das Bedienelement als Stellelement mit einem kontinuierlichen Einstellbereich ausgestaltet sein. Insbesondere kann das Bedienelement als Drehgriff ausgestaltet sein, das von dem Fahrer innerhalb des Stellbereichs bedient werden kann. Das als Stellelement ausgestaltete Bedienelement kann ein Signal abgeben, das eine quantitative Antriebskraftanforderung darstellt. Insbesondere kann mit dem Bedienelement, das als Stellelement ausgestaltet ist, von dem Fahrer die Größe der Antriebskraft im Zusammenhang mit der Antriebskraftanforderung vorgegeben werden. Das von dem als Stellelement ausgestalteten Bedienelement abgegebene Signal kann in dem Verfahren verwendet werden, um in dem Schritt zum Ansteuern der elektrischen Antriebsmaschine die Antriebskraft der Antriebsmaschine entsprechend der Betätigung des als Stellelement ausgestalteten Bedienelements einzustellen.

In einer weiteren Ausführungsform kann das Bedienelement mit einer Kombination eines Schaltelements und eines Stellelements gemäß den vorstehend erläuterten Ausführungsformen ausgestaltet sein.

Gemäß einem weiteren Aspekt ist ein Zweirad vorgesehen, das eine Kurbeleinrichtung und eine elektrische Antriebsmaschine aufweist. Dabei ist das Zweirad durch in die Kurbeleinrichtung eingeleitete Muskelkraft eines Fahrers des Zweirads und eine Antriebskraft der elektrischen Antriebsmaschine über ein Antriebsrad antreibbar. Die Steuerungseinrichtung weist ferner eine Eingabeschnittstelle zur Aufnahme von Signalen zumindest von einem Bedienelement und von am Zweirad vorgesehenen Mitteln zum Erfassen von Drehmomentdaten auf. Ferner weist die Steuerungseinrichtung eine Ausgabeschnittstelle zur Ausgabe von Ansteuersignalen zum Ansteuern der elektrischen Antriebsmaschine auf. Die Steuerungseinrichtung gemäß dem vorliegenden Aspekt ist zur Durchführung des Verfahrens gemäß einem oder mehreren der vorhergehenden Ausführungsformen eingerichtet.

Die Steuerungseinrichtung kann gemäß einer Ausführungsform ein separates Element sein. Alternativ kann die Steuerungseinrichtung in einer Zweiradsteuerungseinrichtung integriert sein, die zusätzlich zu den vorstehend beschriebenen Funktionen weitere Funktionen erfüllt.

Gemäß einem weiteren Aspekt ist ein Zweirad mit einer Kurbeleinrichtung und einer elektrischen Antriebsmaschine vorgesehen. Dabei ist das Zweirad durch in die Kurbeleinrichtung eingeleitete Muskelkraft eines Fahrers des Zweirads und einer Antriebskraft der elektrischen Antriebsmaschine über ein Antriebsrad antreibbar. Das Zweirad gemäß dem vorliegenden Aspekt weist ferner eine Steuerungseinrichtung gemäß dem vorstehenden Aspekt auf.

### Kurze Beschreibung der Figuren

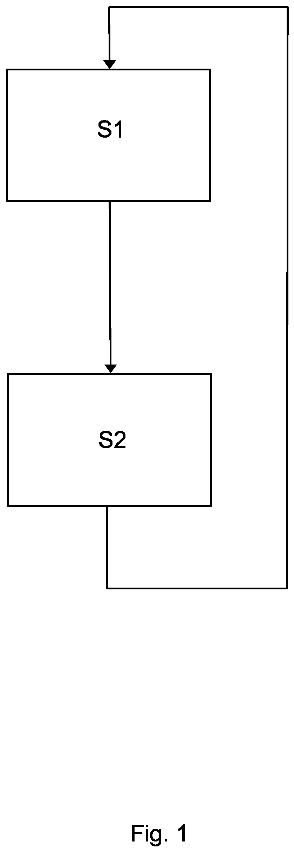

- .Figur 1: zeigt in einer schematischen Darstellung einen Verfahrensablauf zur Erfassung und Speicherung von Drehmomentdaten gemäß einer Ausführungsform;

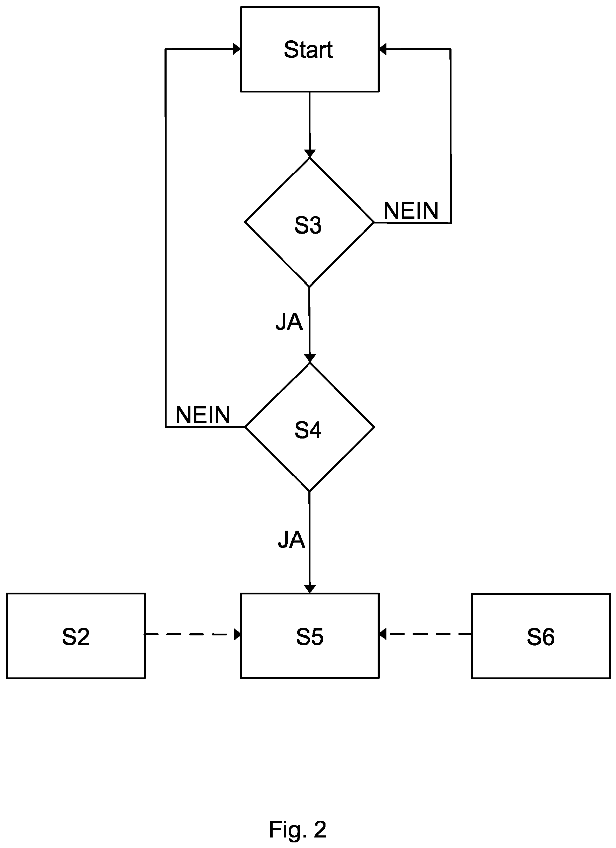

- Figur 2: zeigt in einer schematischen Darstellung einen Verfahrensablauf zum Ansteuern einer elektrischen Antriebsmaschine gemäß einer Ausführungsform.

### Detaillierte Beschreibung von Ausführungsformen

Im Folgenden wird das Grundkonzept der vorliegenden Erfindung anhand der Zeichnungen beschrieben Zunächst wird der Ausgangspunkt der vorliegenden Erfindung erläutert.

Ausgangspunkt für das Grundkonzept der vorliegenden Erfindung ist ein Zweirad, das als Pedelec oder E-Bike ausgestaltet ist. Derartige Zweiräder weisen eine Kurbeleinrichtung auf, die durch Muskelkraft des Fahrers betreibbar ist, um über ein Übertragungsmittel, wie beispielsweise einen Kettenantrieb, ein Antriebsrad des Zweirads anzutreiben. Ferner weisen derartige gattungsgemäße Zweiräder eine elektrische Anschlussmaschine auf, die mit dem Antriebsrad des Zweirads gekoppelt ist, so dass die Antriebskraft der elektrischen Antriebsmaschine auf das Antriebsrad des Zweirads übertragen werden kann. Insofern besteht bei derartigen gattungsgemäßen Zweirädern die Möglichkeit, die Muskelkraft des Fahrers mit der Antriebskraft der elektrischen Antriebsmaschine zu kombinieren. Üblicherweise besteht bei derartigen Zweirädern die Möglichkeit, das Zweirad ausschließlich durch Muskelkraft, die in die Kurbeleinrichtung eingeleitet wird, anzutreiben, während die elektrische Antriebsmaschine nicht betrieben wird. Für den Fall, dass die Kurbeleinrichtung von dem Fahrer betrieben wird, kann zusätzlich die elektrische Antriebsmaschine betrieben werden. Regelmäßig wird bei derartigen Zweirädern der Betrieb der elektrischen Antriebsmaschine unterbunden, sobald die Kurbeleinrichtung von dem Fahrer nicht betrieben wird.

Bisher unberücksichtigt geblieben sind bei dem Betrieb derartiger Zweiräder Situationen, in denen der Betrieb der Kurbeleinrichtung aufgrund von äußeren Einflüssen nicht betrieben werden kann, so dass der gesamte Vortrieb des Zweirads unmittelbar unterbrochen wird. Solche Situationen können sich beispielsweise ergeben, wenn in einem rauen Gelände gefahren wird und die Gefahr besteht, dass die Kurbeleinrichtung während des Betriebs den Untergrund berührt und dies zu einer Unfallgefahr führen kann. Wenn gleichzeitig an einer Steigung gefahren wird, würde das Unterbrechen des Betriebs der Kurbeleinrichtung die unmittelbare Unterbrechung des Vortriebs des Zweirads zur Folge haben. In bestimmten Situationen kann die Unterbrechung des Vortriebs des Zweirads nicht nur einen Komfortverlust zur Folge haben, sondern kann auch die Ursache für eine erhöhte Unfallgefahr darstellen.

Der vorstehende Sachverhalt wird mit der vorliegenden Erfindung berücksichtigt. Eine Ausführungsform, die das vorstehende Problem löst, wird im Folgenden beschrieben.

Gemäß der vorliegenden Ausführungsform weist das Zweirad eine Steuerungseinrichtung auf, die eingerichtet ist, um die Ansteuerung der elektrischen Antriebsmaschine vorzunehmen. Insbesondere ist die Steuerungseinrichtung dazu eingerichtet, die Antriebskraft der elektrischen Antriebseinrichtung gemäß vorbestimmten Vorgaben zu steuern. Zu diesem Zweck wird elektrische Leistung aus einer elektrischen Energiespeichereinrichtung, die an dem Zweirad montiert ist, entnommen und entsprechend der Leistungsanforderung der elektrischen Antriebsmaschine zugeführt.

Ferner weist die Steuerungseinrichtung Eingabeschnittstellen auf, die zur Aufnahme von Signalen eingerichtet sind. Zum einen wird ein Signal von einem am Zweirad vorgesehenen Bedienelement zugeführt, das als Schaltelement mit zwei Schaltpositionen ausgebildet ist. Insofern kann die Steuerungseinrichtung erfassen, ob das Schaltelement von dem Fahrer betätigt wird oder nicht.

Zum anderen werden den Eingangsschnittstellen der Steuerungseinrichtung Signale zugeführt, die auf das Drehmoment bzw. die Antriebskraft am Hinterrad zurückschließen lassen. In der vorliegenden Ausführungsform ist am Antriebsrad, welches das Hinterrad des Zweirads ist, ein Drehmomentsensor vorgesehen, der ein Signal abgibt, das das am Hinterrad vorliegende Drehmoment dargestellt. Dieses Signal wird der Steuerungseinrichtung ebenfalls zugeführt.

Gemäß der vorliegenden Ausführungsform wird in üblicher Weise durch die Zweiradsteuerungseinrichtung der Antrieb der elektrischen Antriebseinrichtung unterbrochen, sobald erfasst wird, dass die Kurbeleinrichtung von dem Fahrer nicht betrieben wird, um regulatorische Erfordernisse zu erfüllen.

Unter Bezugnahme auf Figur 1 wird zunächst in einem Schritt S1 das Signal des Drehmomentsensors am Antriebsrad des Zweirads erfasst. Dabei erfolgt die Erfassung des Drehmoments am Antriebsrad des Zweirads kontinuierlich. In einem folgenden Schritt S2 werden Drehmomentwerte in vorbestimmten Zeitabständen in einer in der Steuerungseinrichtung vorgesehenen Speichereinrichtung gespeichert. Dabei wird in einem nicht beschränkenden Beispiel alle 100 ms ein Drehmomentwert in der Speichereinrichtung der Steuerungseinrichtung abgelegt. Die Speicherung der Drehmomentwerte erfolgt kontinuierlich, jedoch werden solche Drehmomentwerte, die vor einer Zeit erfasst und gespeichert wurden, die einer voreingestellten Zeitspanne entspricht, gelöscht. Diese Zeitspanne kann in einer Ausführungsform 5 Sekunden betragen. Insofern liegen in der Speichereinrichtung Drehmomentwerte des Drehmomentsensors am Antriebsrad des Zweirads von den vergangenen 5 Sekunden vor.

In der vorliegenden Ausführungsform wird der letzte Drehmomentwert als Referenzdrehmoment definiert.

Im Folgenden wird der Verfahrensablauf von Figur 2 erläutert und wird der Zusammenhang zu dem Verfahrensablauf von Figur 1 erklärt. Das in Figur 2 gezeigte Verfahren beginnt bei Start und wird in vorbestimmten kurzen Zeiträumen kontinuierlich durchgeführt. Nachdem das Verfahren von Figur 2 gestartet wurde, wird in Schritt S3 bestimmt, ob eine Antriebskraftanforderung vorliegt. Diese Bestimmung in Schritt S3 wird durch Abfrage des als Schaltelement vorgesehenen Bedienelements durchgeführt. Für den Fall, dass der Fahrer des Zweirads das Bedienelement betätigt, ist die Abfrage in Schritt S3 positiv. Solange der Fahrer das Bedienelement nicht betätigt, ist die Abfrage in Schritt S3 negativ. Für den Fall, dass der Fahrer des Zweirads das Bedienelement betätigt, wird das Verfahren mit Schritt S4 zur Bestimmung des Vorliegens einer Antriebsbedingung fortgesetzt. In der vorliegenden Ausführungsform erfolgt die Abfrage des Schritts S4 durch Bestimmen des Betriebszustands der Kurbeleinrichtung. Für den Fall, dass die Kurbeleinrichtung des Zweirads betrieben wird, wird in Schritt S4 bestimmt, dass eine Antriebsbedingung nicht vorliegt. Für den Fall, dass in Schritt S4 bestimmt wird, dass die Kurbeleinrichtung betrieben wird, wird bestimmt, dass eine Antriebsbedingung vorliegt. In diesem Fall wird das Verfahren in Schritt S5 fortgesetzt. In dem Fall, dass die Abfragen in den Schritten S3 und S4 negativ sind, wird das Verfahren zum Start zurückgeführt.

Im Schritt S5 wird die elektrische Antriebsmaschine angesteuert. In diesem Zusammenhang wird, wie in Figur 2 gezeigt ist, der in Figur 1 gezeigte Verfahrensablauf berücksichtigt. Insbesondere wird bei Schritt S5 zum Ansteuern der elektrischen Antriebsmaschine der Inhalt der Speichereinrichtung, insbesondere das relevante Referenzdrehmoment berücksichtigt. Ferner wird in dem Schritt S5 zum Ansteuern der elektrischen Antriebsmaschine das Ergebnis eines Schritts S6 zum Bestimmen einer Abbruchbedingung berücksichtigt, die im Folgenden erläutert wird.

Für den Fall, dass nach der Abfrage der Schritte S3 und S4 der Schritt S5 zum Ansteuern der elektrischen Antriebsmaschine durchgeführt wird, wird zunächst das Referenzdrehmoment als Solldrehmoment der elektrischen Antriebsmaschine gesetzt, das in dem in Figur 1 gezeigten Verfahrensablauf in Schritt S2 gespeichert wurde. Ferner wird im Schritt S6 zum Bestimmen der Abbruchbedingung kontinuierlich geprüft, ob eine Abbruchbedingung für die Ansteuerung der elektrischen Antriebsmaschine vorliegt. Für den Fall, dass keine Abbruchbedingung in Schritt S6 bestimmt wird, wird die elektrische Antriebsmaschine auf der Grundlage des Referenzdrehmoments angetrieben.

In der vorliegenden Ausführungsform wird das Ansteuern der elektrischen Antriebsmaschine mit dem Referenzdrehmoment für eine vorbestimmte Zeitspanne fortgesetzt. Für den Fall, dass die vorbestimmte Zeitspanne verstrichen ist, wird in Schritt S6 bestimmt, dass eine Abbruchbedingung vorliegt. Insofern wird nach Ablauf der vorbestimmten Zeitspanne, die in der vorliegenden Ausführungsform im Bereich von 5 Sekunden liegen kann, das Ansteuern der elektrischen Antriebsmaschine unterbrochen.

Im Folgenden wird ein konkreter Anwendungsfall des Steuerungsverfahrens gemäß der vorliegenden Ausführungsform erläutert. In einer Ausgangssituation fährt der Fahrer das Zweirad auf sehr unebenem Untergrund mit einer vorbestimmten Geschwindigkeit. Gemäß einem Szenario erkennt der Fahrer, dass die Kurbeleinrichtung und insbesondere die Hüllkurve der an der Kurbeleinrichtung angebrachten Pedale bei fortgesetztem Betrieb den Untergrund berühren würden, was zu vermeiden ist. Somit wird der Fahrer intuitiv den Betrieb der Kurbeleinrichtung einstellen, um die Kollision der Kurbeleinrichtung mit dem Untergrund zu vermeiden.

In dieser Situation würde ein übliches gattungsgemäßes Zweirad, das als Pedelec oder E-Bike ausgestaltet ist, den Antrieb der elektrischen Antriebsmaschine unmittelbar unterbrechen, da festgestellt wird, dass der Betrieb der Kurbeleinrichtung eingestellt wurde.

Bei einem Zweirad, das mit der vorstehend beschriebenen Funktionalität ausgestattet ist, wird der Fahrer unmittelbar nach Einstellen des Betriebs der Kurbeleinrichtung das Bedienelement betätigen, so dass der Betrieb der elektrischen Antriebsmaschine fortgesetzt wird, wie vorstehend unter Bezugnahme auf den Verfahrensablauf von Figur 2 erläutert wurde. Insbesondere wird die elektrische Antriebsmaschine mit einer Antriebsleistung betrieben, die den letzten gespeicherten Drehmomentwert am Antriebsrad des Zweirads berücksichtigt. Somit wird unmittelbar nach der Betätigung des Bedienelements die Fahrt des Zweirads im Wesentlichen nahtlos fortgesetzt und kann dadurch die Unfallgefahr verringert werden und der Komfort der Fahrt verbessert werden.

Aufgrund des fortgesetzten Antriebs der elektrischen Antriebsmaschine wird das Zweirad aus dem Bereich bewegt, in welchem die Gefahr einer Kollision der Kurbeleinrichtung mit dem Untergrund besteht. Insofern kann der Fahrer den Betrieb der Kurbeleinrichtung wieder aufnehmen, sobald die Gefahr einer Kollision der Kurbeleinrichtung mit dem Untergrund nicht mehr besteht. Aus diesem Grund ist als Abbruchbedingung eine Zeitspanne definiert, nach deren Verstreichen das Ansteuern der elektrischen Antriebsmaschine unterbrochen wird, sofern die Kurbeleinrichtung vom Fahrer nicht weiter betrieben wird. Wird während dieser Zeitspanne der Betrieb der Kurbeleinrichtung erneut aufgenommen, wird der Betrieb der elektrischen Antriebsmaschine wieder eingeleitet, wie es bei gattungsgemäßen Zweirädern üblich ist, die als Pedelec oder E-Bike ausgestaltet sind.

In einer abweichenden Ausführungsform ist an dem Zweirad ein Bedienelement vorgesehen, das als Stellelement mit einer kontinuierlichen Einstellbarkeit zur Vorgabe eines Sollwerts der Antriebskraft der elektrischen Antriebsmaschine ausgebildet ist. Abweichend von der vorhergehenden Ausführungsform kann der Fahrer in einer Situation, die vorstehend beschrieben wurde, das Stellelement betätigen und somit die Antriebskraft zum Fortsetzen des Antriebs des Zweirads vorgeben. In dieser Ausführungsform können in einer Alternativ die Drehmomentdaten, die in dem in Figur 1 gezeigten Verfahrensablauf in Schritt S2 gespeichert werden, berücksichtigt werden und insbesondere als Start-Drehmoment dienen, sobald der Fahrer das Stellelement betätigt. In einer alternativen Ausführungsform kann die Ansteuerung der elektrischen Antriebsmaschine unabhängig von den in Schritt S2 gespeicherten Drehmomentdaten erfolgen. Insbesondere besteht in dieser Alternative die Möglichkeit, dass der Fahrer die Antriebskraft am Antriebsrad des Zweirads durch entsprechende Einstellung an dem Stellelement vornimmt.

In einer weiteren Ausführungsform wird in dem Schritt S4 zum Bestimmen des Vorliegens einer Antriebsbedingung bestimmt, ob seit der Unterbrechung der Ansteuerung der elektrischen Antriebsmaschine eine vorbestimmte Zeit verstrichen ist oder nicht. Diese vorbestimmte Zeit kann beispielsweise auf 1 Sekunde gesetzt werden. Solange diese vorbestimmte Zeit seit dem Abbruch der Ansteuerung der elektrischen Antriebsmaschine nicht verstrichen ist, wird der Schritt S5 zur Ansteuerung der elektrischen Antriebsmaschine nicht ausgeführt. In dieser Ausführungsform wird gewährleistet, dass aufgrund der Betätigung des Bedienelements ein kontinuierlicher elektrischer Antrieb des Zweirads unterbunden wird. Als weitere Antriebsbedingung, die in Schritt S4 zur Bestimmung des Vorliegens einer Antriebsbedingung bestimmt wird, kann alternativ oder zusätzlich die Anzahl von Radumdrehungen erfasst werden, die seit dem Abbruch der Ansteuerung der elektrischen Antriebsmaschine erfolgt ist. Wenn beispielsweise seit dem Abbruch der Ansteuerung der elektrischen Antriebsmaschine eines der Räder sich um beispielsweise um weniger als eine vorbestimmte Anzahl von Umdrehungen, beispielsweise eine Umdrehung, gedreht hat, wird die in Schritt S5 durchgeführte Ansteuerung der elektrischen Antriebsmaschine unterbunden. In ähnlicher Weise kann als Antriebsbedingung bei der Bestimmung des Schritts S4 die Anzahl der Umdrehungen der Kurbeleinrichtung verwendet werden, die beispielsweise eine Anzahl von fünf Umdrehungen umfassen kann. Somit kann in dieser alternativen Ausführungsform bei Unterschreiten der vorbestimmten Anzahl der Umdrehungen der Kurbeleinrichtung seit dem Abbruch der Ansteuerung der elektrischen Antriebsmaschine der Antrieb der elektrischen Antriebsmaschine unterbunden werden.

In einer weiteren alternativen Ausführungsform kann als Antriebsbedingung des Schritts S4 die Steigung berücksichtigt werden, an dem das Zweirad sich aktuell befindet. Zu diesem Zweck kann beispielsweise über einen Neigungssensor oder ähnliche Erfassungsmittel bestimmt werden, ob sich das Zweirad relativ zu der Horizontalen an einer Steigung befindet. Somit kann bei dem Schritt S4 zum Bestimmen des Vorliegens einer Antriebsbedingung berücksichtigt werden, dass die Antriebsbedingung nur dann vorliegt, wenn das Zweirad sich an einer Steigung befindet, die mindestens einen vorbestimmten Steigungswinkel aufweist. Mit dieser Ausführungsform wird der Vorteil der vorliegenden Erfindung besonders deutlich, da die unmittelbare Unterbrechung des Vortriebs eines gattungsgemäßen Zweirads an einer Steigung insbesondere in unebenem Gelände eine Gefahrenquelle darstellt.

Das vorstehende Konzept ist auf Zweiräder mit unterschiedlichen Antriebskonzepten anwendbar. Insbesondere können verschiedene Antriebsmaschinen zum Einsatz kommen, beispielsweise ein Mittelmotor und ein Radnabenmotor. Die Ausgestaltung des Zweirads, auf das das Verfahren anwendbar ist, ist insgesamt variabel, solange eine Kurbeleinrichtung und eine elektrische Antriebsmaschine vorgesehen ist.

### Bezugszeichen

- S1: Erfassen von Drehmomentdaten
- S2: Speichern von Drehmomentdaten
- S3: Bestimmen einer Antriebskraftanforderung
- S4: Bestimmen des Vorliegens einer Antriebsbedingung
- S5: Ansteuern der elektrischen Antriebsmaschine
- S6: Bestimmen der Abbruchbedingung

## Patentansprüche

1. Verfahren zum Steuern eines elektrischen Antriebs eines Zweirads, das auf der Grundlage einer in eine Kurbeleinrichtung des Zweirads eingeleiteten Muskelkraft eines Fahrers und einer Antriebskraft einer an dem Zweirad vorgesehenen elektrischen Antriebsmaschine über ein Antriebsrad antreibbar ist, mit den folgenden Schritten:
Erfassen von Drehmomentdaten (S1), die sich auf die Antriebskraft an dem Antriebsrad des Zweirads beziehen;
wobei eine Neigung des Zweirads in Fahrrichtung bezogen aus die Horizontale an der Position des Zweirads erfasst wird,
Bestimmen des Vorliegens einer Antriebskraftanforderung (S3) des Fahrers zu einer Bereitstellung einer Antriebskraft von der elektrischen Maschine;
Bestimmen des Vorliegens einer Antriebsbedingung (S4) für die Bereitstellung der Antriebskraft von der elektrischen Maschine;
wobei erfasst wird, dass die Antriebsbedingung vorliegt, wenn die erfasste Neigung mindestens einem vorbestimmten eine Steigung definierenden Neigungswert entspricht,
Ansteuern der elektrischen Antriebsmaschine (S5) zur Bereitstellung der Antriebskraft nach Bestimmung des Vorliegens der Antriebskraftanforderung des Fahrers zur Bereitstellung einer Antriebskraft von der elektrischen Maschine und bei Bestimmung des Vorliegens der Antriebsbedingung für die Bereitstellung der Antriebskraft von der elektrischen Maschine.

2. Verfahren nach Anspruch 1, wobei die Drehmomentdaten mindestens einen Drehmomentwert oder mehrere Drehmomentwerte umfassen, die in einer zeitlichen Abfolge oder kontinuierlich erfasst werden, und mit dem Schritt des Speicherns der Drehmomentdaten (S2) in einer Speichereinrichtung.

3. Verfahren nach Anspruch 2, wobei der Schritt des Speicherns der Drehmomentdaten (S2) innerhalb eines vorbestimmten vorhergehenden Zeitraums erfolgt.

4. Verfahren nach Anspruch 3, wobei auf der Basis der Drehmomentdaten ein Referenzdrehmoment bestimmt wird, das insbesondere durch Bestimmen eines Mittelwerts, eines Maximalwerts oder eines gewichteten Werts aus den innerhalb des vorbestimmten Zeitraums gespeicherten Drehmomentdaten bestimmt wird.

5. Verfahren nach einem der vorhergehenden Ansprüche, wobei die nach Bestimmen des Vorliegens der Antriebskraftanforderung verstrichene Zeit erfasst wird, wobei erfasst wird, dass die Antriebsbedingung vorliegt, wenn die verstrichene Zeit nach Bestimmung des Vorliegens der Antriebskraftanforderung eine vorbestimmte Zeitdauer nicht übersteigt.

6. Verfahren nach einem der vorgehenden Ansprüche, ferner mit einem Schritt zum Bestimmen einer Abbruchbedingung (S6), wobei das Ansteuern der elektrischen Antriebsmaschine (S5) zur Bereitstellung der Antriebskraft nach Bestimmung des Vorliegens der Antriebskraftanforderung bei Bestimmung des Vorliegens der Abbruchbedingung unterbrochen wird.

7. Verfahren nach Anspruch 6, wobei im Schritt zum Bestimmen einer Abbruchbedingung (S6) die Abbruchbedingung bestimmt wird, wenn die nach Bestimmung des Vorliegens der Antriebskraftanforderung verstrichene Zeit eine vorbestimmte Zeitdauer übersteigt.

8. Verfahren nach Anspruch 6 oder 7, wobei die nach der Unterbrechung des Ansteuerns der elektrischen Maschine zur Bereitstellung der Antriebskraft verstrichene Zeit erfasst wird, wobei erfasst wird, dass die Antriebsbedingung vorliegt, wenn die nach der Unterbrechung des Ansteuerns der elektrischen Maschine zur Bereitstellung der Antriebskraft verstrichene Zeit mindestens einer vorbestimmten Zeitdauer entspricht.

9. Verfahren nach Anspruch 6 oder 7, wobei die nach der Unterbrechung des Ansteuerns der elektrischen Maschine zur Bereitstellung der Antriebskraft erfolgenden Umdrehungen an einem der Räder oder an einer Kurbeleinrichtung des Zweirads erfasst werden, wobei erfasst wird, dass die Antriebsbedingung vorliegt, wenn die nach der Unterbrechung des Ansteuerns der elektrischen Maschine zur Bereitstellung der Antriebskraft erfassten Umdrehungen mindestens einer vorbestimmten Anzahl von Umdrehungen entspricht.

10. Verfahren nach einem der vorhergehenden Ansprüche, wobei das Ansteuern der elektrischen Antriebsmaschine (S5) unter Berücksichtigung der erfassten Drehmomentdaten erfolgt.

11. Verfahren nach Anspruch 10, wobei im Schritt des Ansteuerns der elektrischen Antriebsmaschine (S5) die Antriebskraft derart eingestellt wird, dass der Antrieb des Zweirads nach Bestimmung des Vorliegens der Antriebskraftanforderung ausgehend von dem Antrieb des Zweirads vor der Bestimmung des Vorliegens der Antriebskraftanforderung fortgesetzt wird.

12. Verfahren nach Anspruch 10 oder 11, wobei im Schritt des Ansteuerns der elektrischen Antriebsmaschine (S5) die Antriebskraft derart eingestellt wird, dass die Antriebskraft des Zweirads nach Bestimmung des Vorliegens der Antriebskraftanforderung im Wesentlichen auf der Antriebskraft des Zweirads vor der Bestimmung des Vorliegens der Antriebskraftanforderung gehalten wird.

13. Verfahren nach einem der vorhergehenden Ansprüche, wobei das Ansteuern der elektrischen Antriebsmaschine (S5) zur Bereitstellung der Antriebskraft nach Bestimmung des Vorliegens der Antriebskraftanforderung des Fahrers gestattet wird, wenn die Einleitung von Muskelkraft durch den Fahrer in die Kurbeleinrichtung unterbrochen ist oder die Kurbeleinrichtung von dem Fahrer nicht betrieben wird.

14. Verfahren nach einem der vorhergehenden Ansprüche, wobei die Antriebskraftanforderung von einem an dem Zweirad vorgesehen Bedienelement erfasst wird, wobei das Bedienelement insbesondere als Schaltelement mit zwei Schaltpositionen ausgebildet ist.

15. Verfahren nach einem der Ansprüche 1-14, wobei die Antriebskraftanforderung von einem an dem Zweirad vorgesehen Bedienelement erfasst wird, wobei das Bedienelement als Stellelement mit einer kontinuierlichen Einstellbarkeit zur Vorgabe eines Sollwerts der Antriebskraft der elektrischen Antriebsmaschine ausgebildet ist.

16. Steuerungseinrichtung für ein Zweirad mit einer Kurbeleinrichtung und einer elektrischen Antriebsmaschine, wobei das Zweirad durch in die Kurbeleinrichtung eingeleitete Muskelkraft eines Fahrers des Zweirads und eine Antriebskraft der elektrischen Antriebsmaschine über ein Antriebsrad antreibbar ist, mit einer Eingabeschnittstelle zur Aufnahme von Signalen zumindest von einem Bedienelement und von am Zweirad vorgesehenen Mitteln zum Erfassen von Drehmomentdaten sowie mit einer Ausgabeschnittstelle zur Ausgabe von Ansteuersignalen zum Ansteuern der elektrischen Antriebsmaschine, wobei die Steuerungseinrichtung zur Durchführung des Verfahrens nach einem der vorhergehenden Ansprüche eingerichtet ist.

17. Zweirad mit einer Kurbeleinrichtung und einer elektrischen Antriebsmaschine, wobei das Zweirad durch in die Kurbeleinrichtung eingeleitete Muskelkraft eines Fahrers des Zweirads und eine Antriebskraft der elektrischen Antriebsmaschine über ein Antriebsrad antreibbar ist, ferner mit einer Steuerungseinrichtung nach Anspruch 16.

## Claims

1. Method for controlling an electric drive of a two-wheeled vehicle, which is driveable via a drive wheel on the basis of a muscle force of a rider introduced into a crank device of the two-wheeled vehicle and of a drive force of an electric drive machine provided on the two-wheeled vehicle, comprising the following steps:
acquiring torque data (S1) relating to the drive force at the drive wheel of the two-wheeled vehicle;
wherein an inclination of the two-wheeled vehicle in the direction of travel in relation to the horizontal is detected at the position of the two-wheeled vehicle,
determining the presence of a drive-force demand (S3) from the rider for providing a drive force from the electric machine;
determining the presence of a drive condition (S4) for providing the drive force from the electric machine;
wherein it is detected that the drive condition is present if the detected inclination corresponds to at least a predetermined slope-defining inclination value,
controlling the electric drive machine (S5) for providing the drive force following determination of the presence of the drive-force demand from the rider for providing a drive force from the electric machine and if the presence of the drive condition for providing the drive force from the electric machine has been determined.

2. Method according to Claim 1, wherein the torque data comprise at least one torque value or multiple torque values that are acquired in a temporal sequence or continuously, and comprising the step of storing the torque data (S2) in a memory device.

3. Method according to Claim 2, wherein the step of storing the torque data (S2) is carried out within a predetermined preceding period of time.

4. Method according to Claim 3, wherein a reference torque is determined on the basis of the torque data, said reference torque being determined in particular by determination of an average value, a maximum value or a weighted value from the torque data stored within the predetermined period of time.

5. Method according to one of the preceding claims, wherein the elapsed time following determination of the presence of the drive-force demand is detected, wherein it is detected that the drive condition is present if the elapsed time following determination of the presence of the drive-force demand does not exceed a predetermined duration.

6. Method according to one of the preceding claims, further comprising a step for determining a termination condition (S6), wherein the step of controlling the electric drive machine (S5) for providing the drive force following determination of the presence of the drive-force demand is interrupted if the presence of the termination condition is determined.

7. Method according to Claim 6, wherein, in the step for determining a termination condition (S6), the termination condition is determined if the elapsed time following determination of the presence of the drive-force demand exceeds a predetermined duration.

8. Method according to Claim 6 or 7, wherein the elapsed time following the interruption of the control of the electric machine for providing the drive force is detected, wherein it is detected that the drive condition is present if the elapsed time following the interruption of the control of the electric machine for providing the drive force corresponds to at least a predetermined duration.

9. Method according to Claim 6 or 7, wherein the revolutions at one of the wheels or at a crank device of the two-wheeled vehicle that are realized following the interruption of the control of the electric machine for providing the drive force are detected, wherein it is detected that the drive condition is present if the revolutions detected following the interruption of the control of the electric machine for providing the drive force correspond to at least a predetermined number of revolutions.

10. Method according to one of the preceding claims, wherein the step of controlling the electric drive machine (S5) is carried out with account taken of the acquired torque data.

11. Method according to Claim 10, wherein, in the step of controlling the electric drive machine (S5), the drive force is set in such a way that, following determination of the presence of the drive-force demand, the drive of the two-wheeled vehicle is continued on the basis of the drive of the two-wheeled vehicle prior to the determination of the presence of the drive-force demand.

12. Method according to Claim 10 or 11, wherein, in the step of controlling the electric drive machine (S5), the drive force is set in such a way that, following determination of the presence of the drive-force demand, the drive force of the two-wheeled vehicle is maintained substantially at the drive force of the two-wheeled vehicle prior to the determination of the presence of the drive-force demand.

13. Method according to one of the preceding claims, wherein the step of controlling the electric drive machine (S5) for providing the drive force following determination of the presence of the drive-force demand from the rider is permitted if the introduction of muscle force by the rider into the crank device has been interrupted or the crank device is not operated by the rider.

14. Method according to one of the preceding claims, wherein the drive-force demand is detected by a control element provided on the two-wheeled vehicle, wherein the control element is designed in particular as a switching element with two switching positions.

15. Method according to one of Claims 1-14, wherein the drive-force demand is detected by a control element provided on the two-wheeled vehicle, wherein the control element is designed as an actuating element with continuous settability for predefining a target value of the drive force of the electric drive machine.

16. Control device for a two-wheeled vehicle which has a crank device and has an electric drive machine, wherein the two-wheeled vehicle is driveable via a drive wheel by way of muscle force of a rider of the two-wheeled vehicle introduced into the crank device and of a drive force of the electric drive machine, having an input interface for receiving signals at least from a control element and from means for acquiring torque data provided on the two-wheeled vehicle, and having an output interface for outputting control signals for controlling the electric drive machine; wherein the control device is configured for carrying out the method according to one of the preceding claims.

17. Two-wheeled vehicle having a crank device and having an electric drive machine, wherein the two-wheeled vehicle is driveable via a drive wheel by way of muscle force of a rider of the two-wheeled vehicle introduced into the crank device and of a drive force of the electric drive machine, further having a control device according to Claim 16.

## Revendications

1. Procédé de commande d'un entraînement électrique d'un deux-roues, qui peut être entraîné par une roue motrice sur la base d'une force musculaire d'un conducteur introduite dans un dispositif à manivelle du deux-roues et d'une force d'entraînement d'une machine d'entraînement électrique prévue sur le deux-roues, avec les étapes suivantes :
détection de données de couple de rotation (S1), qui se rapportent à la force d'entraînement exercée sur la roue motrice du deux-roues ;
une inclinaison du deux-roues dans le sens de la marche par rapport à l'horizontale étant détectée sur la position du deux-roues,
définition de la présence d'une demande de force d'entraînement (S3) du conducteur pour fournir une force d'entraînement provenant de la machine électrique ;
définition de la présence d'une condition d'entraînement (S4) pour la fourniture de la force d'entraînement provenant de la machine électrique ;
le fait que la condition d'entraînement soit présente lorsque l'inclinaison détectée correspond à au moins une valeur d'inclinaison prédéfinie définissant une pente étant détecté,
pilotage de la machine d'entraînement électrique (S5) pour fournir la force d'entraînement après que la présence de la demande de force d'entraînement du conducteur pour fournir une force d'entraînement provenant de la machine électrique a été définie et lorsque la présence de la condition d'entraînement pour fournir la force d'entraînement provenant de la machine électrique est définie.

2. Procédé selon la revendication 1, les données de couple de rotation comprenant au moins une valeur de couple de rotation ou plusieurs valeurs de couple de rotation, qui sont détectées dans une séquence chronologique ou en continu, et avec l'étape du stockage des données de couple de rotation (S2) dans un dispositif de stockage.

3. Procédé selon la revendication 2, l'étape du stockage des données de couple de rotation (S2) étant effectuée dans une période de temps précédente prédéfinie.

4. Procédé selon la revendication 3, un couple de rotation de référence étant défini sur la base des données de couple de rotation, lequel est défini en particulier en définissant une valeur moyenne, une valeur maximale ou une valeur pondérée à partir des données de couple de rotation stockées dans la période de temps prédéfinie.

5. Procédé selon l'une des revendications précédentes, le temps écoulé après la définition de la présence de la demande de force d'entraînement étant détecté, le fait que la condition d'entraînement est présente lorsque le temps écoulé après la définition de la présence de la demande de force d'entraînement ne dépasse pas une durée prédéfinie étant détecté.

6. Procédé selon l'une des revendications précédentes, avec en outre une étape destinée à définir une condition d'interruption (S6), le pilotage de la machine d'entraînement électrique (S5) pour fournir la force d'entraînement étant interrompu après que la présence de la demande de force d'entraînement a été définie lorsque la présence de la condition d'interruption est définie.

7. Procédé selon la revendication 6, la condition d'interruption étant définie dans l'étape destinée à définir une condition d'interruption(S6) lorsque le temps écoulé après la définition la présence de la demande de force d'entraînement dépasse une durée prédéfinie.

8. Procédé selon la revendication 6 ou 7, le temps écoulé après l'interruption du pilotage de la machine électrique pour fournir la force d'entraînement étant détecté, le fait que la condition d'entraînement est présente lorsque le temps écoulé après l'interruption du pilotage de la machine électrique pour fournir la force d'entraînement correspond à au moins une durée prédéfinie étant détecté.

9. Procédé selon la revendication 6 ou 7, les révolutions effectuées après l'interruption du pilotage de la machine électrique pour fournir la force d'entraînement étant détectées sur une des roues ou sur un dispositif à manivelle du deux-roues étant détectées, le fait que la condition d'entraînement est présente lorsque les révolutions détectées après l'interruption du pilotage de la machine électrique pour fournir la force d'entraînement correspondent à au moins un nombre prédéfini de révolutions étant détecté.

10. Procédé selon l'une des revendications précédentes, la machine d'entraînement électrique (S5) étant pilotée en tenant compte des données de couple de rotation détectées.

11. Procédé selon la revendication 10, la force d'entraînement étant réglée dans l'étape du pilotage de la machine d'entraînement électrique (S5) de telle manière que, après que la présence de la demande de force d'entraînement a été définie, l'entraînement du deux-roues se poursuit en partant de l'entraînement du deux-roues avant que la présence de la demande de force d'entraînement n'ait été définie.

12. Procédé selon la revendication 10 ou 11, la force d'entraînement étant réglée dans l'étape du pilotage de la machine d'entraînement électrique (S5) de telle manière que, après que la présence de la demande de force d'entraînement a été définie, la force d'entraînement du deux-roues est maintenue sensiblement sur la force d'entraînement du deux-roues avant que la présence de la demande de force d'entraînement n'ait été définie.

13. Procédé selon l'une des revendications précédentes, le pilotage de la machine d'entraînement électrique (S5) pour fournir la force d'entraînement étant autorisé après que la présence de la demande de force d'entraînement du conducteur a été définie lorsque l'introduction de la force musculaire par le conducteur dans le dispositif à manivelle est interrompue ou que le dispositif à manivelle n'est pas actionné par le conducteur.

14. Procédé selon l'une des revendications précédentes, la demande de force d'entraînement étant détectée par un élément de commande prévu sur le deux-roues, l'élément de commande étant formé en particulier comme un élément de commutation avec deux positions de commutation.

15. Procédé selon l'une des revendications 1 à 14, la demande de force d'entraînement étant détectée par un élément de commande prévu sur le deux-roues, l'élément de commande étant formé comme un élément de réglage avec une possibilité de réglage continue pour spécifier une valeur de consigne de la force d'entraînement de la machine d'entraînement électrique.

16. Dispositif de commande pour un deux-roues avec un dispositif à manivelle et une machine d'entraînement électrique, le deux-roues pouvant être entraîné par une roue motrice par la force musculaire d'un conducteur du deux-roues introduite dans le dispositif à manivelle et une force d'entraînement de la machine d'entraînement électrique, avec une interface d'entrée pour recevoir des signaux d'au moins un élément de commande et des moyens prévus sur le deux-roues pour détecter des données de couple de rotation ainsi qu'avec une interface de sortie pour délivrer des signaux de pilotage pour piloter la machine d'entraînement électrique ; le dispositif de commande étant mis au point pour mettre en œuvre le procédé selon l'une des revendications précédentes.

17. Deux-roues avec un dispositif à manivelle et une machine d'entraînement électrique, le deux-roues pouvant être entraîné par une roue motrice par la force musculaire d'un conducteur du deux-roues introduite dans le dispositif à manivelle et une force d'entraînement de la machine d'entraînement électrique, avec en outre un dispositif de commande selon la revendication 16.
